# EUROPÄISCHE PATENTANMELDUNG

(11) **EP 1 661 749 A1**
(43) Veröffentlichungstag der Anmeldung: **31.05.2006**
(21) Anmeldenummer: 05024727.9
(22) Anmeldetag: 11.11.2005
(51) Int. Cl.: B60K 28/10, F02N 15/10

(54) **System zum Sicherstellen der Anlassbarkeit einer in einem Antriebsstrang eines Fahrzeugs enthaltenen Brennkraftmaschine**

(30) Priorität: 25.11.2004 DE 102004056850
(71) Anmelder: LuK Lamellen und Kupplungsbau Beteiligungs KG, 77813 Bühl (DE)
(72) Erfinder: Nazari, Behzad, Dr., 72622 Nürtingen (DE); Martin, Jens, 76547 Sinzheim-Kartung (DE); Ehrlich, Matthias, 77815 Bühl (DE); Hirt, Joachim, 77704 Oberkirch (DE); Stengel, Frank, 76534 Baden-Baden (DE); Fuss, Martin, 76131 Karlsruhe (DE); Schweizer, Alexander, 77815 Bühl (DE); Zimmermann, Martin, 77880 Sasbach (DE)

(57) **Zusammenfassung**

Ein System zum Sicherstellen der Anlassbarkeit einer in einem Antriebsstrang eines Fahrzeugs enthaltenen Brennkraftmaschine (4) enthält zusätzlich zu einer Betätigungsvorrichtung (16,18) eine im Antriebsstrang zwischen der Brennkraftmaschine (4) und angetriebenen Fahrzeugrädern (14) enthaltene Drehmomentübertragungseinrichtung eine von einer Bedienperson des Fahrzeugs betätigbare Freigabeeinrichung (34), mittels der Betätigbarkeit eines Anlassers (32) zum Anlassen der Brennkraftmaschine (4) bei unterbrochener Drehmomentübertragung zwischen der Brennkraftmaschine (4) und angetriebenen Rädern (14) des Kraftfahrzeugs freigebbar ist.

## Beschreibung

Die Erfindung betrifft ein System zum Sicherstellen der Anlassbarkeit einer in einem Antriebsstrang eines Fahrzeugs enthaltenen Brennkraftmaschine.

Bei mit einer automatisierten Kupplung bzw. von einer Aktoreinrichtung betätigbaren Kupplung ausgerüsteten Fahrzeugen kann die Brennkraftmaschine aus Sicherheitsgründen nur angelassen werden, wenn vorbestimmte Bedingungen erfüllt sind. Beispielsweise muss sich das Getriebe in einem Neutralgang befinden und/oder die Kupplung muss offen sein. Zusätzlich kann erforderlich sein, dass die Fahrzeugbremse betätigt ist. Bei automatischen Getrieben ist die Anlasserfreigabe typischerweise daran geknüpft, dass sich ein Wählhebel in der Stellung N oder P befindet. Mit den vorgenannten Maßnahmen ist sichergestellt, dass sich das Fahrzeug beim Anlassen der Brennkraftmaschine nicht unbeabsichtigt in Bewegung setzt.

Um bei einem Fehler oder einem Ausfall der elektronischen Steuerung von Betätigungssystemen für eine automatisierte Kupplung in jedem Fall ein Abschleppen bzw. Schieben des Fahrzeugs zu ermöglichen, sind sogenannte Notöffnen-Vorrichtungen bekannt, die von einer Bedienperson des Fahrzeugs aktivierbar sind, um die Kupplung zu öffnen und dadurch das Fahrzeug auch dann schieben bzw. abschleppen zu können, wenn im Getriebe ein Gang eingelegt ist.

Ein Problem von Fahrzeugen mit automatischem bzw. automatisierten Antriebsstrang kann sich daraus ergeben, dass bei einem Fehler in der Kupplungs-/Getriebesteuer- bzw. Betätigungseinrichtung die Bedingung zur Anlasserfreigabe nicht mehr erfüllt wird, so dass die Brennkraftmaschine nicht gestartet werden kann, um beispielsweise die Heizung oder die Klimaanlage oder auch die Lichtmaschine im Falle eines Liegenbleibens des Fahrzeugs betreiben zu können.

Der Erfindung liegt die Aufgabe zugrunde, Abhilfe für dieses Problem zu schaffen.

Diese Aufgabe wird mit einem System zum Sicherstellen der Anlassbarkeit einer in einem Antriebsstrang eines Fahrzeugs enthaltenen Brennkraftmaschine gelöst, welches System zusätzlich zu einer Betätigungsvorrichtung für eine im Antriebsstrang zwischen der Brennkraftmaschine und angetriebenen Fahrzeugrädern enthaltene Drehmomentübertragungseinrichtung eine von einer Bedienperson des Fahrzeugs betätigbare Freigabeeinrichtung enthält, mittels der die Betätigbarkeit eines Anlassers zum Anlassen der Brennkraftmaschine bei unterbrochener Drehmomentübertragung von der Brennkraftmaschine zu angetriebenen Rädern des Fahrzeugs freigebbar ist.

Mit der erfindungsgemäßen Freigabeeinrichtung wird erreicht, dass die Sicherheitsstrategie, die ein Betätigen des Anlassers nur unter im Allgemeinen gleichzeitige Erfüllung mehrerer Bedingungen gestattet, überwunden wird, so dass die Brennkraftmaschine angelassen werden kann, wenn nur die Drehmomentübertragung von der Brennkraftmaschine zu den angetriebenen Rädern unterbrochen ist.

Vorteilhafterweise enthält die Freigabeeinrichtung eine Notöffnen-Vorrichtung, die von einer Bedienperson des Fahrzeugs zum Unterbrechen der Drehmomentübertragung von der Brennkraftmaschine zu den angetriebenen Rädern betätigbar ist, wobei die Betätigbarkeit des Anlassers bei durch die Notöffnen-Vorrichtung unterbrochener Drehmomentübertragung freigegeben ist.

In einer bevorzugten Ausführungsform ist die Notöffnen-Vorrichtung derart ausgebildet, dass sie die Kupplung öffnet.

Die Erfindung kann für weitgehend alle Arten automatisierter Antriebsstränge eingesetzt werden, beispielsweise solche, die eine von einem Aktor betätigte Kupplung und ein automatisiertes Schaltgetriebe enthalten, Antriebsstränge, die ein automatisch schaltendes Parallelschaltgetriebe mit zwei wechselseitig geschlossenen Kupplungen enthalten, Antriebsstränge mit automatisch schaltenden Planetengetrieben usw.

Die Erfindung wird im Folgenden anhand schematischer Zeichnungen beispielsweise und mit weiteren Einzelheiten erläutert.

### In den Figuren stellen dar:

Figur 1 ein Prinzipschaltbild eines Fahrzeugantriebstrangs und

Figur 2 eins Flussdiagramm zur beispielhaften Erläuterung der Funktionsweise eines erfindungsgemäßen Systems.

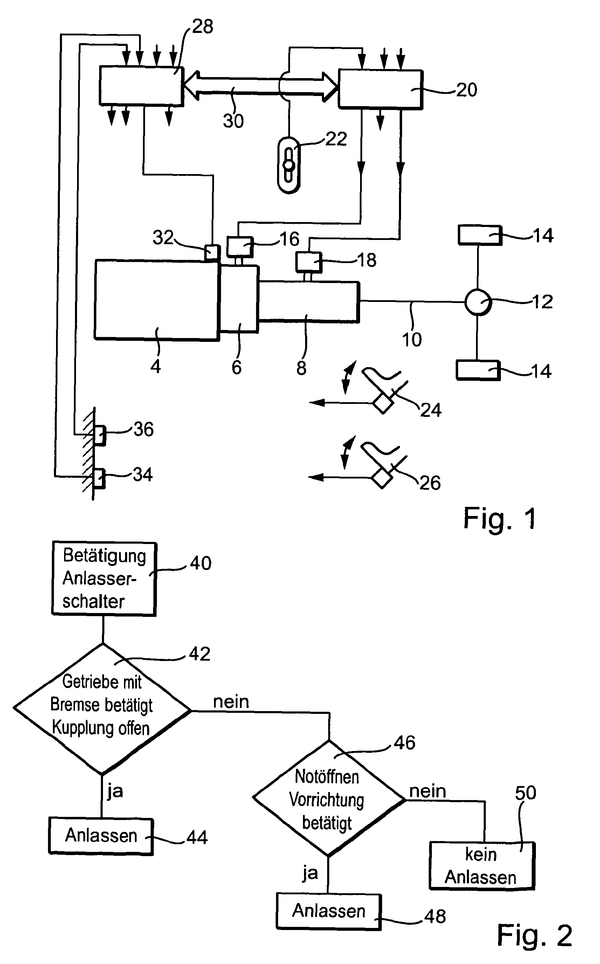

Gemäß Figur 1 enthält ein Fahrzeugantriebsstrang eine Brennkraftmaschine 4, die über eine Kupplung 6 mit einem Getriebe 8 verbunden ist, das über eine Ausgangswelle 10 und ein Differenzial 12 mit angetriebenen Rädern 14 eines Kraftfahrzeugs verbunden ist.

Die Kupplung 6 kann beispielsweise eine Reibungskupplung sein, die mittels einer Aktoreinrichtung 16 betätigbar ist.

Das Getriebe 8 kann ein automatisiertes Schaltgetriebe sein, das mittels einer Aktoreinrichtung 20 betätigbar ist.

Zur Steuerung des Betriebs der Aktoreinrichtungen 16 und 18 ist ein Getriebesteuergerät 22 vorgesehen, das einen Mikroprozessor mit zugehörigen Speichereinrichtungen enthält, in denen unterschiedliche Programme abgelegt sind, die über einen Wählhebel 22 ansteuerbar sind. Eingänge des Getriebesteuergerätes 20 sind mit nicht dargestellten Sensoren, wie Drehzahlsensoren zur Erfassung der Drehzahl der Kurbelwelle der Brennkraftmaschine, der Drehzahl der Ausgangswelle 10, einem Sensor zur Erfassung der Stellung eines Laststellgliedes der Brennkraftmaschine 4, und/oder Sensoren zur Erfassung der Stellung eines Fahrpedals 24 und einem Sensor zur Erfassung der Stellung eines Bremspedals 26 verbunden.

Zur Steuerung der Leistungsabgabe der Brennkraftmaschine 4 ist ein Motorsteuergerät 28 vorgesehen, das mit dem Getriebesteuergerät 20 über einen BUS 30 kommuniziert und mit einem nicht dargestellten Laststellglied der Brennkraftmaschine sowie einem Anlasser 32 verbunden ist. Eingänge des Motorsteuergerätes 28 sind mit Sensoren zur Erfassung der den Betrieb der Brennkraftmaschine steuernden Parameter sowie einem manuell betätigbaren Schalter 34 zur Aktivierung einer Notöffnen-Vorrichtung und einem Anlasserschalter 36 verbunden. Die Notöffnen-Vorrichtung ist in der Software der Steuergeräte 20 bzw. 28 implementiert und bewirkt, dass bei Betätigen des Schalters 34 die Kupplung 6 geöffnet wird.

Aufbau und Funktion der bisher beschriebenen Elemente und Baugruppen sind an sich bekannt und werden daher nicht näher erläutert. Das Blockschaltbild der Figur 1 kann in unterschiedlicher Weise abgeändert werden, beispielsweise können die Steuergeräte 20 und 28 zu einem Steuergerät zusammengefasst sein oder ihre Funktion kann auf weitere Steuergeräte verteilt sein. Jeweils erforderliche Daten werden über den BUS 30 kommuniziert.

Damit sich das Fahrzeug bei einem Betätigen des Anlassers 32 nicht unbeabsichtigt in Bewegung setzt, sind verschiedene Sicherheitsmaßnahmen implementiert, die anhand der Figur 2 erläutert werden.

Sei angenommen, im Schritt 40 wird der Anlasserschalter 36 betätigt.

Im Schritt 42 wird dann überprüft, ob durch eine jeweilige Sicherheitsstrategie vorgegebene Bedingungen erfüllt sind, beispielsweise ob sich das Getriebe 8 in Neutral Stellung bzw. im Nullgang befindet, ob eine Fahrzeugbremse betätigt ist, beispielsweise die Handbremse angezogen ist oder das Bremspedal 24 betätigt ist, ob die Kupplung 6 geöffnet ist (was beispielsweise durch einen nicht dargestellten, in der Aktoreinrichtung 16 enthaltenen Stellungssensor festgestellt werden kann), ob sich der Wählhebel 22 in Neutral Stellung befindet usw. Die im Schritt 42 überprüften Bedingungen können durch weitere ergänzt werden (z. B. Motordrehzahl gleich Null) oder können durch Unterkombinationen der geschilderten Bedingungen gegeben sein. Wenn im Schritt 42 festgestellt wird, dass die Sicherheitsbedingungen erfüllt sind, erfolgt im Schritt 44 ein Anlassen der Brennkraftmaschine 4.

Wenn im Schritt 42 festgestellt wird, dass die Bedingungen nicht erfüllt sind, wird im Schritt 46 erfindungsgemäß überprüft, ob durch Betätigen des Schalters 34 die in einem oder beiden der Steuergeräte 20 und 28 implementierte Notöffnen-Vorrichtung aktiviert ist, die dazu führt, dass die Kupplung 6 durch Betätigen des Schalters 34 der Aktoreinrichtung 16 unmittelbar geöffnet wird. Ist dies der Fall, so erfolgt im Schritt 48 ein Anlassen. Ist dies nicht der Fall, so erfolgt trotz Betätigung des Anlasserschalters 40 kein Anlassen der Brennkraftmaschine (Schritt 50).

Erfindungsgemäß wird durch eine Betätigung der Notöffnen-Vorrichtung mit Hilfe des Schalters 34 erreicht, dass bei aktivierter Notöffnen-Vorrichtung ein Anlassen der Brennkraftmaschine möglich ist.

Es versteht sich, dass die Möglichkeit des Anlassens bei betätigter Notöffnen-Vorrichtung an weitere Bedingungen geknüpft sein kann, beispielsweise die Betätigung einer Fahrzeugbremse. Des weiteren muss eine Betätigung der Notöffnen-Vorrichtung nicht zwangsläufig zur Öffnung der Kupplung 6 führen, sondern kann auch dazu führen, dass das Getriebe 8 in Neutral Stellung geschaltet wird. In jedem Fall führt Betätigung der Notöffnen-Vorrichtung mit Hilfe des Schalters 34 dazu, dass die Drehmomentübertragung von der Brennkraftmaschine 4 zu den angetriebenen Rädern 14 unterbrochen ist. Mit der Erfindung wird in jedem Fall erreicht, dass bei aktivierter Notöffnen-Vorrichtung und gegebenenfalls weiteren Bedingungen, wie Fahrzeugstillstand, Motorstillstand, Bremse betätigt usw., der Motor angelassen werden kann, um die Heizung bzw. die Klimaanlage eines liegengebliebenen Fahrzeugs in Betrieb zu setzen und weitere Verbraucher mit Strom zu versorgen, ohne dass sich das Fahrzeug unbeabsichtigt in Bewegung setzt. Fehler im Getriebesteuergerät oder der Aktoreinrichtung für das Getriebe können somit nicht dazu führen, dass der Motor nicht mehr angelassen werden kann. Je nach Ausgestaltung der Erfindung kann auch erreicht werden, dass Fehler in der Kupplungsbetätigungseinrichtung nicht dazu führen, dass die Brennkraftmaschine nicht mehr angelassen werden kann, wenn beispielsweise durch die Notöffnen-Vorrichtung sichergestellt ist, dass sicht das Getriebe 8 in einem Neutralgang befindet.

Es versteht sich, dass bei Anwendung der Erfindung für Doppelkupplungs- bzw. Parallelschaltgetriebe beide Kupplungen des Getriebes durch die Notöffnen-Vorrichtung (in der Software des bzw. der Steuergeräte implementiert) geöffnet werden. Die Schalter 34 und 36 müssen nicht notwendigerweise manuell betätigte Schalter sein; sie können auch durch Spracheingabe oder sonstwie betätigt werden.

### Bezugszeichenliste

- 4: Brennkraftmaschine
- 6: Kupplung
- 8: Getriebe
- 10: Ausgangswelle
- 12: Differenzial
- 14: angetriebene Räder
- 16: Aktoreinrichtung (Kupplung)
- 18: Aktoreinrichtung (Getriebe)
- 20: Getriebesteuergerät
- 22: Wählhebel
- 24: Fahrpedal
- 26: Bremspedal
- 28: Motorsteuergerät
- 30: BUS
- 32: Anlasser
- 34: Schalter (Notöffnen)
- 36: Anlasserschalter

## Patentansprüche

1. System zum Sicherstellen der Anlassbarkeit einer in einem Antriebsstrang eines Fahrzeugs enthaltenen Brennkraftmaschine, welches System zusätzlich zu einer Betätigungsvorrichtung (16, 18) für eine im Antriebsstrang zwischen der Brennkraftmaschine (4) und angetriebenen Fahrzeugrädern (14) enthaltene Drehmomentübertragungseinrichtung (6, 8) eine von einer Bedienperson des Fahrzeugs betätigbare Freigabeeinrichung (34) enthält, mittels der die Betätigbarkeit eines Anlassers (32) zum Anlassen der Brennkraftmaschine bei unterbrochener Drehmomentübertragung zwischen der Brennkraftmaschine und angetriebenen Rädern des Kraftfahrzeugs freigebbar ist.

2. System nach Anspruch 1, wobei die Freigabeeinrichtung eine Notöffnen-Vorrichtung zum Unterbrechen der Drehmomentübertragung zwischen der Brennkraftmaschine (4) und den angetriebenen Rädern (14) des Fahrzeugs enthält, die von einer Bedienperson des Fahrzeugs betätigbar ist, wobei die Betätigbarkeit des Anlassers (32) bei durch die Notöffnen-Vorrichtung unterbrochener Drehmomentübertragung freigegeben ist.

3. System nach Anspruch 2, wobei die Notöffnen-Vorrichtung derart ausgebildet ist, dass sie die Kupplung (6) öffnet.
